# EUROPÄISCHE PATENTSCHRIFT

(11) **EP 1 557 339 B1**
(45) Veröffentlichungstag und Bekanntmachung des Hinweises auf die Patenterteilung: **11.09.2013**
(21) Anmeldenummer: 05000962.0
(22) Anmeldetag: 19.01.2005
(51) Int. Cl.: B62D 7/10, B62D 7/16

(54) **Vorderachse mit Einzelradaufhängung und lenkbaren Rädern eines Nutzfahrzeugs**
Frontaxle with independent wheel suspension and steerable wheels of a commercial vehicle
Suspension de roues avants indépendantes et directrices de véhicule industriel

(30) Priorität: 23.01.2004 DE 102004003395
(43) Veröffentlichungstag der Anmeldung: 27.07.2005
(73) Patentinhaber: MAN Truck & Bus AG, 80995 München (DE)
(72) Erfinder: Barnreiter, Robert, Dipl.-Ing., 80469 München (DE); Harmeier, Reinhard, Dipl.-Ing., 82194 Gröbenzell (DE); Schaller, Karl-Victor, Dr., 82194 Gröbenzell (DE)

(56) Entgegenhaltungen:
- EP-A1- 1 932 691
- WO-A-02/053447
- HAMSTEN B: "BAUREIHE 300. DIE NEUE REISEBUS-GENERATION VON KAESSBOHRER" 1. April 1992 (1992-04-01), ATZ AUTOMOBILTECHNISCHE ZEITSCHRIFT, FRANCKH'SCHE VERLAGSHANDLUNG. STUTTGART, DE, PAGE(S) 170-176,178 , XP000264700 ISSN: 0001-2785 * das ganze Dokument *
- STENGELIN A: "DER NEUE REISEBUS O 404 VON MERCEDES-BENZ" ATZ AUTOMOBILTECHNISCHE ZEITSCHRIFT, FRANCKH'SCHE VERLAGSHANDLUNG. STUTTGART, DE, Bd. 94, Nr. 1, Januar 1992 (1992-01), Seiten 4-6,8,11, XP000241628 ISSN: 0001-2785

## Beschreibung

Die Erfindung betrifft eine Einzelradaufhängung der lenkbaren Räder einer Vorderachse eines Nutzfahrzeugs nach dem Oberbegriff des Anspruches 1.

Aus der DE 199 40 527 A1 ist eine solche Vorderradaufhängung für Nutzfahrzeuge bekannt. Hier wird durch einen Quertenker, z. B. Dreieckslenker, und einem Führungsglied, das in einem spitzen Winkel zur Vertikalen angeordnet und einenendes mit dem Radträger und andemendes mit dem Fahrzeugrahmen verbunden ist, die Führung des Rades festgelegt. Parallel zu dem genannten Führungsglied ist eine (Luft-) Federdämpfereinheit angeordnet. Da der Querlenker und das Führungsglied jeweils festgelegte Bewegungsbahnen haben, die nicht genau zueinander passen, muss die Lagerung des Führungsgliedes am Rahmen weich sein, was der Führungsgenaulgkeit des Rades nicht dienlich ist. Wo die Lenkung angeordnet ist, was ebenfalls einen entscheidenden Einfluss auf die Lenkgenauigkeit und Lenkstabilität hat, ist in der genannten Offenlegungsschrift nicht offenbart.

Aus der DE 100 11 417 A1 ist eine Doppelpendelachse mit lenkbaren Rädern bekannt. Die Doppelpendelachse weist oben liegende Querlenker und unten liegende Schräglenker auf, was, auch durch die relativ großen Abstände der Lagerpunkte der Lenker bedingt, eine gute Radführung ergibt. Federn und Dämpfer sind voneinander getrennt. Die Lenkung ist eine bekannte Zahnstangenlenkung mit Mittenabgriff und fahrzeugmittig und quer zur Fahrtrichtung angeordnet.

Aus der Veröffentlichung "Hamsten, B; Baureihe 300. Die neue Reisebus-Generation von Kaessbohrer; 1.4.1992; ATZ Automobiltechnische Zeitschrift; Franckh'sche Verlagshandlung; Stuttgart; Seiten 170-176,178" ist eine gelenkte Vorderachse eines Reisebusses bekannt, dioe über eine Einzelradaufhängung verfügt.

In diesem Zusammenhang beschreibt die WO 021053347 A eine Vorderachse mit Einzelradaufhängung eines Nutzfahrzeugs, die über einen Fahrschemel verfügt, an dem Teile einer Radaufhängung und einer Lenkung montierbar sind und die auch einen unteren sowie einen oberen als Querlenker ausgeführten Dreieckslenker aufweist. Weiterhin ist eine Federdämpfereinheit vorgesehen, die an ihrem unteren Ende mit dem unteren Querlenker verbunden ist.

Ausgehend von dem bekannten Stand der Technik liegt der Erfindung die Aufgabe zugrunde, eine Vorderachse mit Einzelradaufhängung und lenkbaren Rädern, wobei die Räder mittels eines hydraulisch unterstützten Schraublenkgetriebes lenkbar sind, darzustellen, die einen hohen Fahrkomfort aufweist und eine niedrige Bauhöhe hat, um das Antriebsaggregat zumindest in der bisherigen Einbaulage, besser noch niedriger als bisher, einbauen zu können.

Die Aufgabe wird erfindungsgemäß durch die Kennzeichnenden Merkmale des Anspruches 1 gelöst. Weiter vorteilhafte Ausbildungen der Erfindung sind in den Unteransprüchen enthalten.

Dadurch, dass die Ausgangswelle (Lenkspindel) des Schraublenkgetriebes etwa vertikal angeordnet ist, eine dreigeteilte Spurstange verwendet wird sowie ein Lenkhebel am Lenkgetriebe und ein Lenkzwischenhebel am Fahrschemel durch eine Dreiteilung der Spurstange optimiert ausgestaltet sind, ergibt sich eine Lenkung mit geringsten Lenkfehlern und ein Platz sparender Einbau.

Weiterhin ist in der Luftfeder eine Schraubendruckfeder integriert, die zur Luftfeder parallel geschaltet ist.

Durch die genannte Parallelschaltung der Federn kann der Außendurchmesser der Luftfeder kleiner gehalten werden, das System ist dennoch in der Lage, die erforderlichen Kräfte aufzubringen und es ist eine platzsparende Einzelradabstützung dargestellt.

Die Schraubendruckfeder kann z. B. so ausgelegt sein, dass bei fehlender Druckluftbeaufschlagung in der Luftfeder, das Fahrzeug in einem abgesenkten Zustand oder in einem vorher bestimmten angehobenen Zustand ist.

Die Federdämpfereinheit ist einerseits am unteren Querlenker und andererseits am Fahrschemel befestigt.

Alternativ zu der vorgenannten Befestigungsmöglichkeit sieht eine besonders geeignete Ausführungsform der erfindungsgemäßen Vorderachse mit Einzelradaufhängung vor, dass die Federdämpfereinheit mittels eines Kugelgelenks nicht am unteren Querlenker, sondern direkt am Schwenkträger angelenkt wird. Durch eine derartige Anordnung bzw. Befestigung des Feder-Dämpfer-Moduls wird sichergestellt, dass die in vertikaler Richtung auf das Kugelgelenk zwischen dem Schwenkträger und dem unteren Querträger wirkenden Kräfte reduziert werden und so eine höhere Lebensdauer dieses Kugelgelenks erzielbar ist. Weiterhin wird mit der vorbeschriebenen technischen Lösung ein günstigeres Übersetzungsverhältnis zwischen Rad und Federdämpfereinheit realisiert, so dass vorzugsweise der Betriebsdruck in der Luftfeder im Vergleich zu der Befestigung des Federbeins am unteren Querlenker gesenkt werden kann. In einer ganz besonderen Ausführungsform wird sogar auf eine Zusatzfeder, die üblicherweise als Schraubendruckfeder ausgeführt ist, verzichtet, so dass durch die vorgeschlagene Vorderachsausführung auch eine Kosteneinsparung erreichbar ist.

Ein weiterer Vorteil, der durch die Befestigung der Federdämpfereinheit direkt am Schwenkträger erzielt wird, besteht in der kompakten, besonders Platz sparenden Anordnung des Federdämpferbeins relativ zu der im Bereich der Vorderachse vorgesehenen Bremseinheit.

Da das Feder-Dämpfer-Modul direkt am Schwenkträger angelenkt ist, dreht sich beim Lenken der Anlenkpunkt des Dämpferbeins gemeinsam mit dem Anlenkpunkt, und weicht auf diese Weise der Bremseinheit quasi aus. Darüber hinaus wird durch die direkte Befestigung der Federdämpfereinheit am Schwenkträger eine Schrägstellung des Federbeins in Fahrtrichtung erreicht, was letztendlich zu einer Erhöhung des Schrägfederungswinkels und somit auch zu einer Verbesserung des Fahrkomforts führt.

Das Lenkgetriebe, ein Lenkzwischenhebel und die Querlenker für die Radaufhängung sind an einem Fahrschemel angebaut.

Weiterhin ist der Querstabilisator für die fahrzeugseitige Anbindung über zwei Stützen am Fahrschemel angeordnet.

Das Lenkgetriebe ist so angeordnet, dass die Lenkspindel etwa vertikal zur Fahrbahnebene steht.

An der Ausgangswelle (Lenkspindel) des Schraublenkgetriebes ist der Lenkhebel, der bei Betätigung des Lenkrades etwa waagrechte Schwenkbewegungen durchführt, befestigt.

Die Spurstange ist dreigeteilt und besteht aus einem Spurstangenmittenteil und einem Spurstangenteil links und einem Spurstangenteil rechts, in Fahrtrichtung gesehen. Die Spurstangenteile links und rechts sind identische Bauteile.

Am äußeren Ende des Lenkhebels ist das eine Ende des Spurstangenteils links, angeordnet und das andere Ende des genannten Spurstangenteils ist mit dem Spurhebel, der mit dem Schwenkträger verbunden ist, verbunden.

Weiter innenliegend am Lenkhebel ist das eine Ende des Spurstangenmittenteils über ein Kugelgelenk angeordnet.

Auf der anderen Fahrzeugseite ist, spiegelbildlich zur Fahrzeugmitte, am Fahrschemel der Lenkzwischenhebel, der in seinem Ort des Lagerpunktes und seinen Hebelabständen dem Lenkhebel entspricht, angeordnet.

Am äußeren Ende des Lenkzwischenhebels ist das eine Ende des Spurstangenteils rechts über ein Kugelgelenk angeordnet. Das Spurstangenteil rechts ist an seinem anderen Ende mit dem Spurhebel auf der rechten Seite des Fahrzeugs, ebenfalls über ein Kugelgelenk verbunden.

Das Spurstangenmittenteil ist weiter innen am Lenkhebel und am Lenkzwischenhebel über Kugelgelenke gelagert und verbindet den Lenkhebel mit dem Lenkzwischenhebel.

Bei Geradeausstellung des Lenkgetriebes ist, in der Draufsicht auf die Lenkeinrichtung gesehen, der Winkel den das Spurstangenmittenteil mit der Verbindungslinie des Schwenkmittelpunktes des Lenkhebels und dem Mittelpunkt der Anbindung des Spurstangenmittenteils am Lenkhebel bildet, 90 Winkelgrade. Das gleiche gilt für den Lenkzwischenhebel.

Bei herkömmlichen LKW-Lenkanlagen, die beispielsweise eine Blattfederung und ein am Fahrzeugrahmen angebautes Schraublenkgetriebe aufweisen, ergibt sich, bedingt durch die Anordnung, bei einem größeren aber für links und rechts gleichen Lenkeinschlag an der Lenkhandhabe, ein unterschiedlicher Lenkwinkel am gleichen Fahrzeugrad zwischen Linkseinschlag und Rechtseinschlag.

Bei der erfindungsgemäßen Anordnung sind die Beträge der Radlenkwinkel für Rechts- und Linkseinschlag in Abhängigkeit der Lenkwinkelbeträge an der Lenkhandhabe, gleich.

Der Lenkhebel und der Lenkzwischenhebel sind jeweils an ihrem äußeren Ende zur Fahrzeugmitte hin gekröpft ausgeführt. An dem gekröpften Teil des Lenkhebels ist das Spurstangenteil links und an dem gekröpften Teil des Lenkzwischenhebels ist das Spurstangenteil rechts angeordnet.

Die genannte Ausgestaltung der Kröpfung ist deshalb so gewählt, damit die Lenkwinkeldifferenz zwischen kurveninnerem und kurvenäußerem Rad für alle Lenkeinschläge dem Optimum (Ackermann) möglichst nahe kommt.

Weiterhin ist der Lenkhebel und der Lenkzwischenhebel nach oben hin gekröpft.

Dies ergibt eine Platz sparende Ausführung und es wird damit ein möglichst großer Lenkeinschlag erreicht. Im tiefer liegenden Teil des Lenkhebels und des Lenkzwischenhebels ist der Spurstangenmittelteil befestigt. Durch diese Anordnung kann der Lenkhebel unter dem Lenkgetriebe schwenken.

Der höher liegende Teil des Lenkhebels, an dem das Spurstangenteil links angeordnet ist, schwenkt um das Lenkgetriebe herum. Durch die genannte Kröpfung erhält auch der untere Querlenker links und rechts ausreichend Bewegungsfreiheit.

Weiterhin ist es durch die beschriebene Lenkanordnung möglich, die über der Lenkanordnung angeordnete Motorölwanne nahezu unbeeinflusst zu belassen. Die Motorölwanne hat in diesem Bereich eine geringe Bauhöhe und bietet für die Lenkanordnung den entsprechenden Bauraum.

Am Schwenkträger ist der Radträger befestigt, der u. a. die Radlagereinheit und die Bremsscheibe der Scheibenbremse aufweist. Weiterhin ist an dem Schwenkträger der Spurhebel, der im Normalfall einstückig mit dem Schwenkträger sein kann, angeordnet.

Der Schwenkträger ist an seinem unteren Ende über ein Kugelgelenk am unteren Querlenker befestigt und an seinem oberen Ende, ebenfalls über ein Kugelgelenk, mit dem oberen Querlenker verbunden. Die Verbindungslinie zwischen den Mitten der beiden genannten Kugelgelenke ergibt die Lenkachse. Durch den großen Abstand der genannten Kugelgelenke wird eine exakte und steife Radführung erreicht.

Weiterhin ist am Schwenkträger die Bremszange und an der Bremszange der Federspeicherbremszylinder befestigt.

Die Bremszange ist vor der Mitte der Vorderradachse angeordnet. Damit wird eine Platz sparende Ausgestaltung und ein maximaler Lenkeinschlag erreicht.

Weiterhin sind beispielsweise der Lenkhebel größtenteils und die Spurstangenteile hinter der Mitte des Vorderrads angeordnet.

Der obere Querlenker ist U-förmig ausgebildet und hat weit beabstandete Lagerpunkte am oberen Teil des Fahrschemels. Innerhalb dieser U-förmigen Ausbildung des oberen Querlenkers ist ein Federdämpferbein, das aber keine Radführungsfunktion hat, angeordnet.

Das Federdämpferbein weist im Federteil eine Luftfeder auf, deren Innendruck abhängig von der Radlast über Ventile geregelt wird. Zusätzlich weist der Federteil eine Schraubendruckfeder auf, die parallel zur Luftfeder wirkt. Die Schraubendruckfeder ist in der Luftfeder integriert und von außen nicht sichtbar. Die Schraubendruckfeder unterstützt die Luftfeder, so dass der Außendurchmesser der Luftfeder kleiner dimensioniert werden kann, als dies ohne die Schraubendruckfeder der Fall wäre.

Für die Befestigung der aus Luftfeder und Schraubendruckfeder gebildeten Federdämpfereinheit gibt es zwei alternative Möglichkeiten. Eine Ausführungsform der erfindungsgemäßen Vorderachse sieht die Anbringung der Federdämpfereinheit einerseits am unteren Querlenker und andererseits am Fahrschemel vor. Bei einer anderen, alternativen Ausführung wird die Federdämpfereinheit demgegenüber im unteren Bereich direkt über ein Kugelgelenk am Schwenkträger angelenkt während es im oberen Bereich ebenfalls am Fahrschemel befestigt wird.

Der obere Querlenker ist leicht entgegengesetzt zur Fahrtrichtung angestellt, d. h. die vordere Lagerstelle am Fahrschemel liegt höher als die hintere Lagerstelle. Dadurch erhöht sich der Schrägfederungswinkel. Die Krafteinleitung von Stößen aus Fahrbahnunebenheiten oder aus Hindernissen in das Federdämpferbein ist dadurch besser und das Fahrverhalten ist komfortabler.

Der untere Querlenker und der obere Querlenker sind über Lagerstellen am Fahrschemel mittels Gummi-Metalllagern befestigt.

Weiterhin sind die Lagerstellen für die Lagerung der Querlenker am Fahrschemel weit voneinander entfernt, was erheblich zu einer stabilen Radführung beiträgt.

Der Querstabilisator ist an den unteren Querlenkern ausreichend weit außen liegend je Querlenker angeordnet. Dies ergibt die erforderlichen Kräfte gegen das Wanken des Fahrzeugs.

Im Folgenden wird die Erfindung unter Bezugnahme auf die Figuren anhand von Ausführungsbeispielen beschrieben.

Es zeigen:
- Fig. 1: die Vorderachse in perspektivischer Ansicht,
- Fig. 2: die Vorderachse in der Ansicht II aus Fig. 1,
- Fig. 3: die Seitenansicht der Vorderachse,
- Fig. 4: die Ansicht der Vorderachse von hinten (in Fahrtrichtung gesehen) mit Fahrzeugrahmen,
- Fig. 5: die Draufsicht auf die Vorderachse,
- Fig. 6: eine Schnittzeichnung durch den Federteil des Federdämpferbeins,
- Fig. 7: Anordnung Querstabilisator,
- Fig. 8: Beispiel für den Stand der Technik,
- Fig. 9: Schematische Gegenüberstellung der Befestigung des Federdämpferbeins am unteren Querlenker bzw. direkt am Schwenkträger.

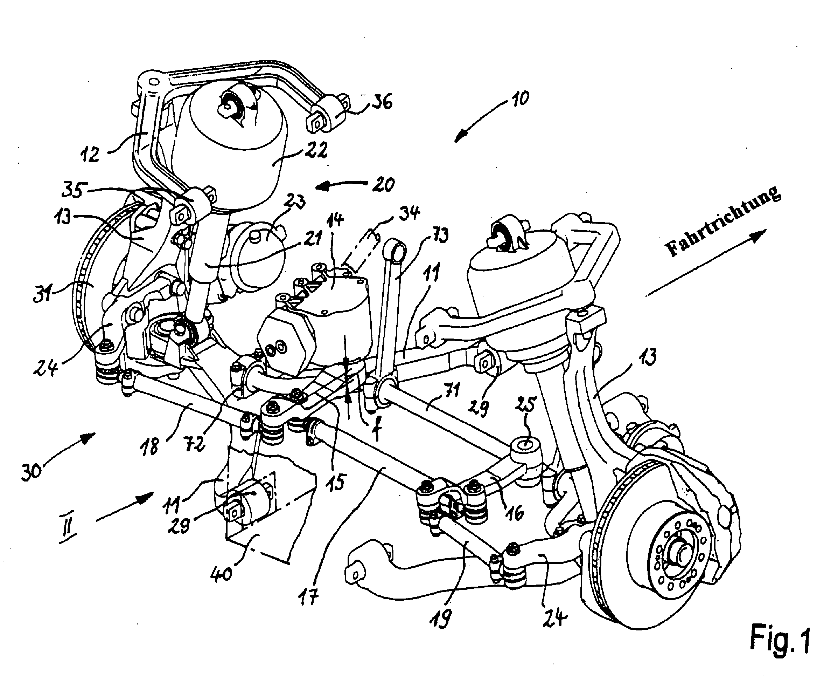

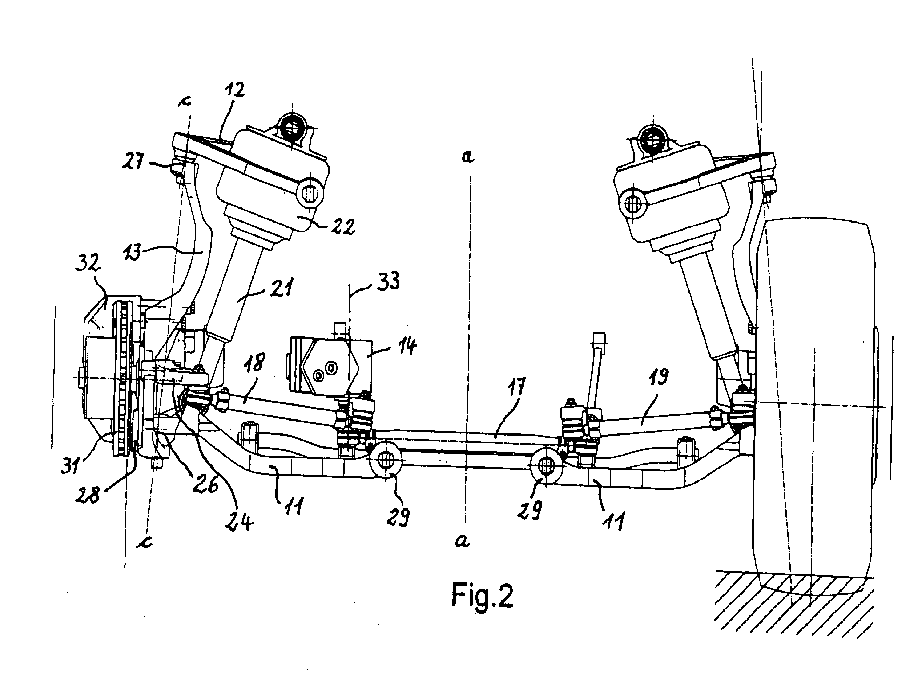

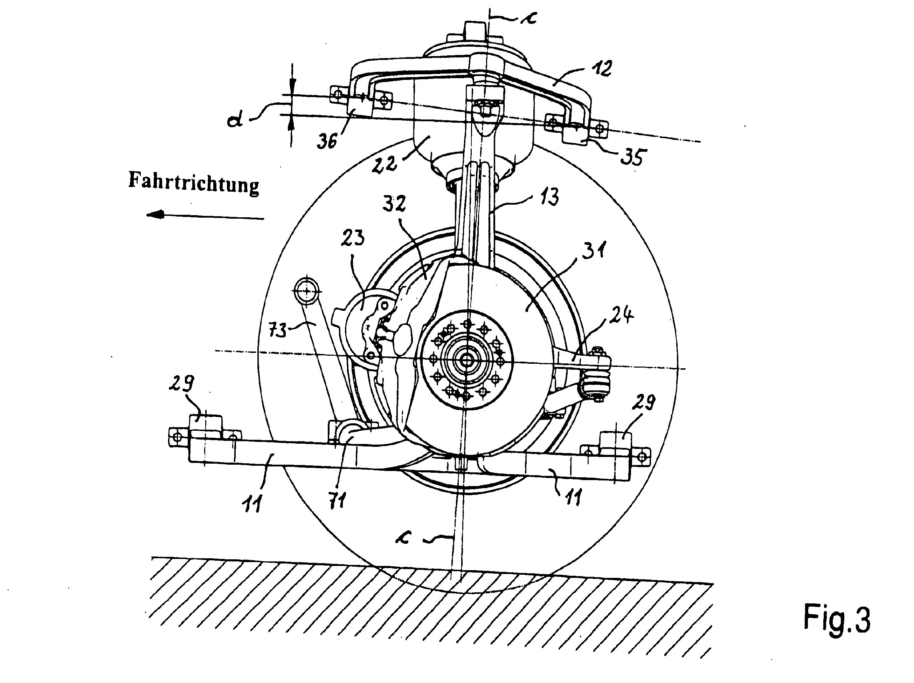

Die Fig. 1 zeigt die Vorderachse 10 mit der Lenkeinrichtung 30 in perspektivischer Ansicht. Der Fahrschemel 40 ist in Fig. 1 nur andeutungsweise und in den Fig. 2 und 3 nicht dargestellt, da sonst die Fig. überlastet wären. Das Lenkgetriebe 14 ist so angeordnet, dass die Lenkspindel bzw. die Lenkspindelachse 33, Fig. 2, etwa vertikal zur Fahrbahnebene steht. An der Lenkspindel ist der Lenkhebel 15 befestigt. Durch das Lenkrad wird über die Lenkwelle 34 und das Lenkgetriebe 14 der Lenkhebel 15 in Schwenkbewegungen versetzt. Die Spurstange 17,18,19 ist dreigeteilt und besteht aus einem linken Spurstangenteil 18, einem rechten Spurstangenteil 19 sowie einem Spurstangenmittenteil 17. An dem äußeren Ende des Lenkhebels 15 ist die linke Spurstange 18 an ihrem einen Ende über ein Gelenk befestigt. An ihrem anderen Ende ist die linke Spurstange 18 mit einem Gelenk am Spurhebel 24 befestigt. Das Spurstangenmittenteil 17 ist weiter innen am Lenkhebel 15 ebenfalls mit einem Gelenk angebracht. Symmetrisch zur Fahrzeugmitte "a" ist auf der rechten Fahrzeugseite der Lenkzwischenhebel 16 angeordnet. Die Lagerung 25 für die Schwenkbewegungen, die der Lenkzwischenhebel 16 ausführt, entspricht der Mittellinie, die der Lenkhebel 15 mit seinen Schwenkbewegungen ausführt, aber spiegelbildlich auf der anderen Fahrzeugseite, auf der rechten Seite des Fahrschemels.

An dem Lenkzwischenhebel 16 ist das Spurstangenmittenteil 17 an seinem anderen Ende gelenkig befestigt.

Das rechte Spurstangenteil 19 ist mit seinem einen Ende am äußeren Ende des Lenkzwischenhebels 16 und mit seinem anderen Ende am Spurhebel des rechten Vorderrades befestigt.

Der Lenkhebel 15 und der Lenkzwischenhebel haben jeweils die Höhenkröpfung "f", wodurch eine Platz sparende Anordnung möglich ist.

An dem Querlenker 11 ist der Schwenkträger 13 mit seinem unteren Ende über ein Kugelgelenk 26, Fig. 2, angebracht. In der Fig. 1 ist der Federspeicherbremszylinder 23 sichtbar, der am Schwenkträger 13 angeschraubt ist.

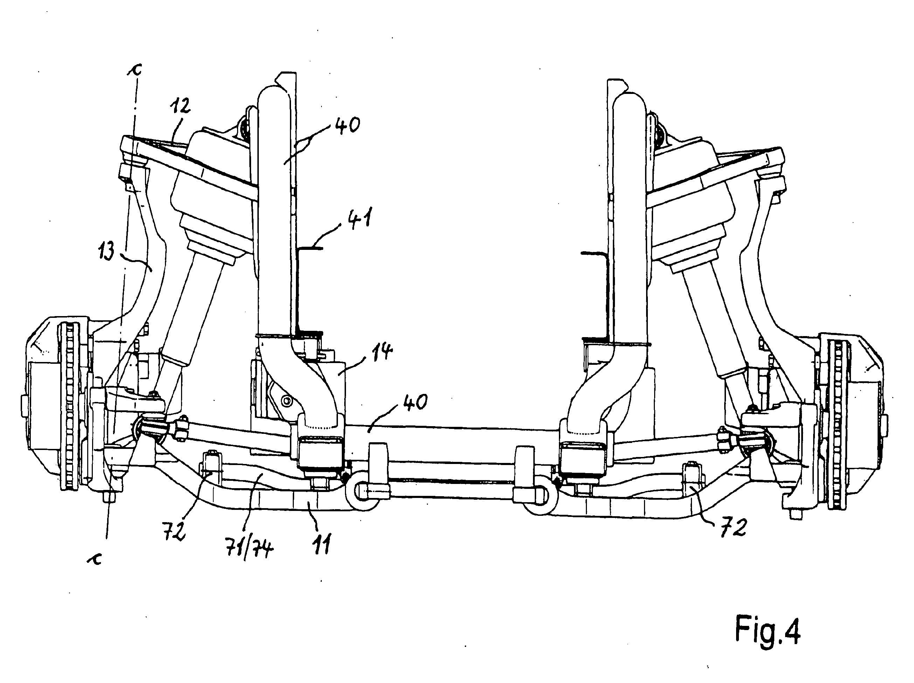

Der Schwenkträger 13 ist an seinem oberen Ende über ein Gelenk mit dem oberen U-förmigen Querlenker 12 und dieser mit dem Fahrschemel 40 (Fig. 4), verbunden.

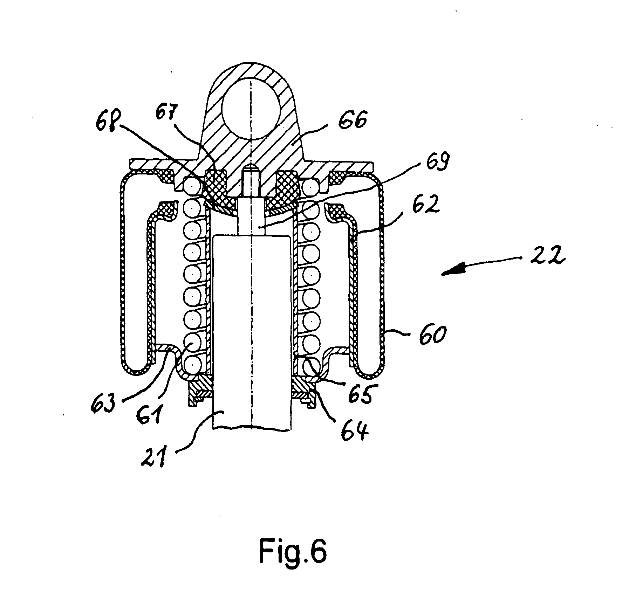

Die Schenkel des U-förmigen Querlenkers 12 sind weit ausladend, so dass das Federdämpferbein 20 in seinem Federteil 22 zwischen den genannten Schenkeln Platz findet. Der Federteil 22 ist in Fig. 6 dargestellt und beschrieben.

Der Dämpferteil 21 ist in diesem Beispiel ein herkömmlicher hydraulischer Dämpfer.

Das Federdämpferbein 20 hat keine Radführungsfunktion.

Die Vorderachse 10 wird auf einem Fahrschemel 40, Fig. 4, als Baueinheit vormontiert und mit dem Fahrschemel 40, der auch als Querversteifung des Rahmens 41 dient, eingebaut.

Die Fig. 2 zeigt die Ansicht II aus Fig. 1, von hinter der Vorderachse aus, in Fahrtrichtung gesehen. Der untere Querlenker 11 ist an den Lagerstellen 29 mit dem Fahrschemel 40, verbunden. An der außenliegenden Seite des Querlenkers 11 ist der Schwenkträger 13 über das Kugelgelenk 26 am Querlenker 11 befestigt. Der Schwenkträger 13 ist oben über das Kugelgelenk 27 mit dem oberen Querlenker 12 verbunden. An dem Schwenkträger 13 ist der Radträger 28 befestigt, der auch die Radlager (nicht dargestellt) und die Bremsscheibe 31 beinhaltet.

Wahlweise ist der Radträger 28 und der Schwenkträger 13 ein Teil.

Weiterhin ist an dem Schwenkträger 13 die Bremszange 32 der Scheibenbremse befestigt. Der Federspeicherbremszylinder 23 ist nur teilweise sichtbar.

Die Fig. 3 zeigt die Seitenansicht der Vorderachse 10. In dieser Darstellung ist die weite Ausladung der Lagerstellen 29 des unteren Querlenkers 11 zu sehen. Weiterhin sieht man die Einbaulage des oberen Querlenkers 12, bei dem das vor der Vorderachse befindliche Lager um den Betrag "d" gegenüber dem hinter der Vorderachse liegenden Lager angestellt ist.

Die Fig. 4 zeigt die komplette Vorderachse 10, Fig. 1, des Fahrzeugs mit dem Fahrschemel 40. Die komplette Vorderachse 10 wird an dem Fahrschemel 40 befestigt und als Baueinheit mit dem Rahmen 41 verbunden. Die Achse c-c ist die Lenkachse c-c mit positiven Lenkrollradius ( Lenkrollradius nicht dargestellt).

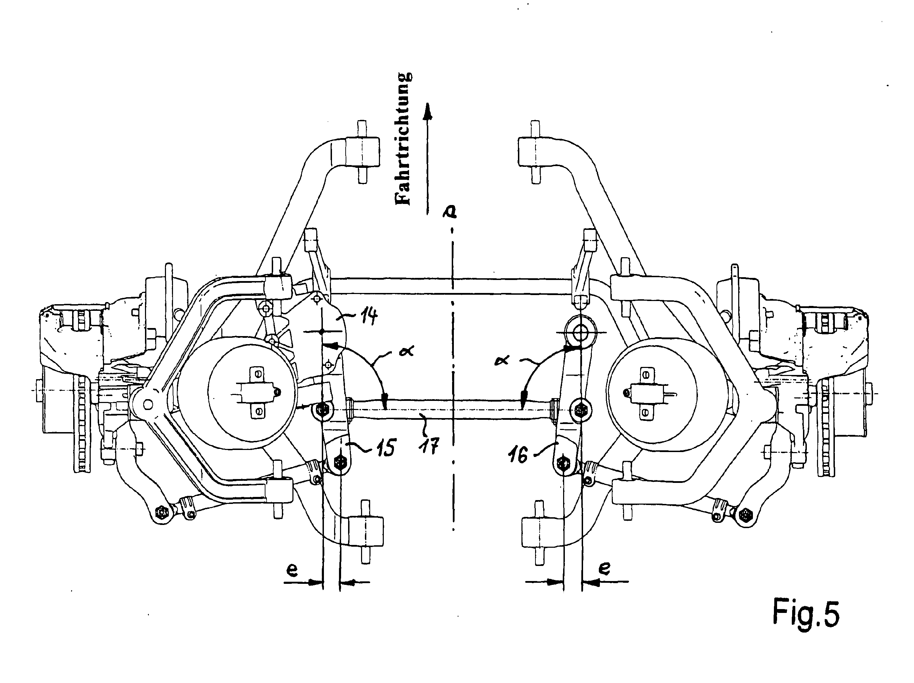

Die Fig. 5 zeigt die Draufsicht auf die Vorderachse 10. Die Längsmittellinie des Spurstangenmittenteils 17 bildet mit der Linie Anlenkpunkt des Spurstangenmittenteils am Lenkhebel und der Mitte des Lenkgetriebes 14 (Mitte der Lenkspindel) einen Winkel α von 90°. Übertragen gilt das gleiche beim Lenkzwischenhebel 16. Der Lenkhebel 15 und der Lenkzwischenhebel 16 sind zur Fahrzeugmitte hin um den Betrag "e" gekröpft.

Die Fig. 6 zeigt den Federteil 22 des Federdämpferbeines 20. Die Luftfeder 60 ist auf ihrer inneren Seite auf einem Stützteil 62 und im oberen Teil am Lagerteil 66 des Federdämpferbeins 20 gelagert. Das Stützteil 62 ist über einen Tellerteil 63 und über einen Ring 64 fest und luftdicht mit der Außenhülle des Dämpfers 21 verbunden. Parallel zur Luftfeder 60 und innerhalb der Luftfeder 60 ist eine Schraubendruckfeder 61 angeordnet, die die Luftfeder in ihrer Tragkraft unterstützt. Im Lagerteil 66 ist ein Elastomerteil 67 eingebaut, das sich auf einer Stahlkalotte 68 in zusammengeschobenem Zustand des Federteils abstützt. Die Kalotte 68 wird durch eine Hülse 65 getragen, die sich ihrerseits auf dem Ring 64 abstützt. Die Kolbenstange 65 des Dämpfers 21 ist mit dem Lagerteil 66 des Federdämpferbeins 20 verschraubt. Bei Beaufschlagung mit Druckluft wandert das Lagerteil 66 nach oben und hebt somit das Fahrzeug an und zieht gleichzeitig die Kolbenstange 69 mit aus dem Gehäuse des Dämpfers 21 heraus.

Es ist jedoch auch denkbar, dass das Federdämpferbein 20 im Federteil 22 entweder nur aus einer Druckfeder (Schraubendruckfeder) oder nur aus einer Luftfeder besteht, z. B. für Fahrzeuge mit niedrigerer Achslast.

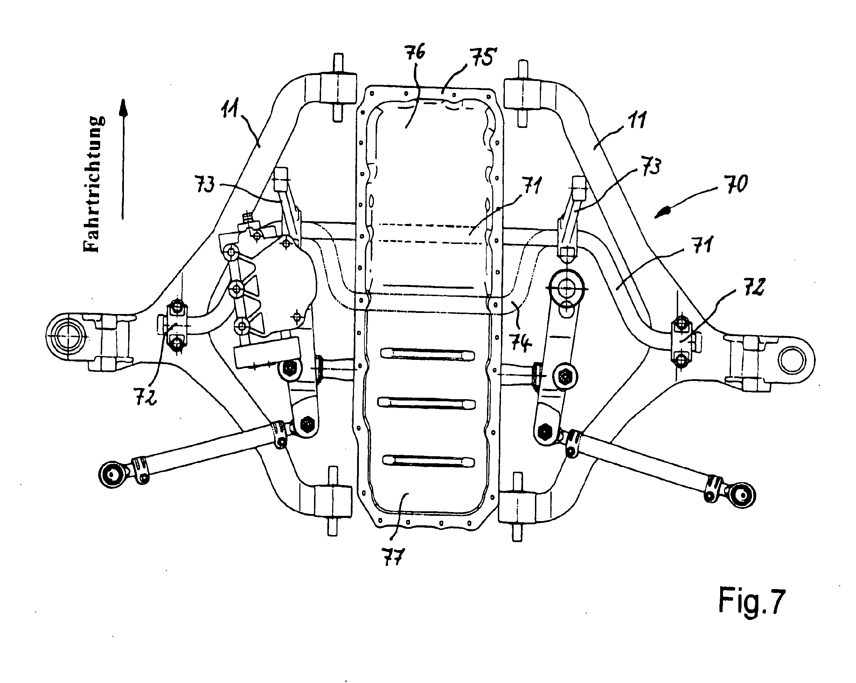

Die Fig. 7 zeigt die Querstabilisatoranordnung 70, die sich vor der Radmitte, in Fahrtrichtung gesehen, befindet. Der Querstabilisator 71 ist an seinen Enden in den Lagern 72 an den unteren Querlenkern 11 links und rechts des Fahrzeugs und möglichst nahe der Radführung gelagert. Die Verbindung zu dem gefederten Fahrzeugaufbau erfolgt über die Koppelstangen 73, die am Fahrschemel 40 (in Fig. 7 nicht dargestellt) gelagert sind und somit den genannten Fahrzeugaufbau mit dem Querstabilisator 71 verbinden.

Der dargestellte Querstabilisatorstab 71 in mittig gerader Ausführung 71 bedingt eine geringfügige Änderung im tiefliegenden Teil 76 (Sumpfteil) der Ölwanne 75. Wenn man den tief liegenden Teil 76 der Ölwanne 75 nicht verändern will, so kann man den Querstabilisatorstab 71 in mittig gekröpfter Ausführung 74 ausgestalten, so dass dieser im Bereich der Ölwanne 75 unter dem hoch liegenden Teil 77 der Ölwanne 75 verläuft. Die Koppelstangen 73 bleiben dabei unverändert in der Form und in der Lage.

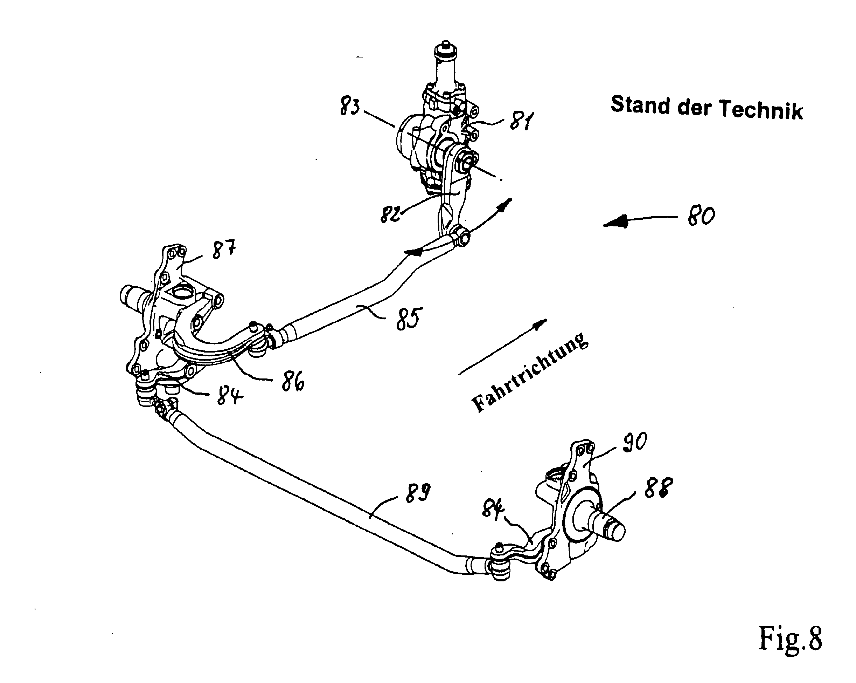

Die Fig. 8 zeigt den Stand der Technik einer hydraulisch unterstützten Lenkeinrichtung 80 für ein Nutzfahrzeug. Das Schraublenkgetriebe 81 hat eine etwa waagrecht angeordnete Lenkspindel 83. An der Lenkspindel 83 ist der Lenkhebel 82 angeordnet, der bei Lenkbewegungen am Lenkrad (nicht dargestellt) durch die Lenkspindel 83 in eine Schwenkbewegung (Pfeile) gebracht wird. Die Lenkstange 85 und ein Hebel 86 übertragen die Schwenkbewegungen des Lenkhebels 82 auf den Schwenkträger links 87, das zu einer Lenkbewegung des linken Rades führt. Über den Spurhebel 84, der am Schwenkträger links 87 befestigt ist, wird über eine einteilige Spurstange 89 die Lenkbewegung auf den Spurhebel 84, der am Schwenkträger rechts 90 befestigt ist, übertragen und damit das rechte Rad gelenkt. In den Schwenkträgern 87,90 sind die Radträger 88 gelagert.

Das Schraublenkgetriebe 81 ist am Fahrzeugrahmen (nicht dargestellt) gelagert.

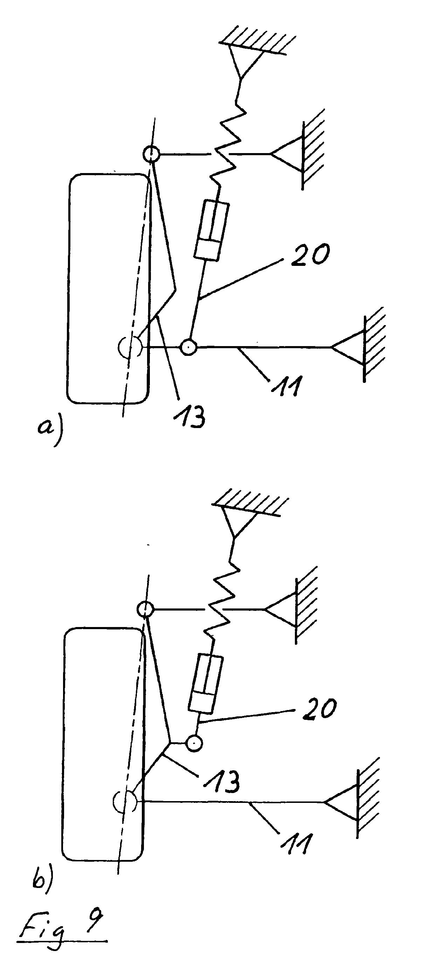

In der Fig. 9 sind in einer schematischen Darstellung die Befestigung des Federdämpferbeins 20 am unteren Querlenker 11 und die direkte Befestigung des Federdämpferbeins 20 am Schwenkträger 13 einander gegenüber gestellt.
Während in der Fig. 9a) die Befestigung des Federdämpferbeins 20 am unteren Querlenker dargestellt ist, zeigt die Fig.9b) die Befestigung des Federdämpferbeins 20 direkt am Schwenkträger 13. Die Befestigung des Federdämpferbeins 20 im unteren Bereich direkt am Schwenkträger 13 stellt eine weitere spezielle Ausführungsform der in den übrigen Figuren dargestellten Vorderachse dar. Durch eine derartige Anordnung bzw. Befestigung des Federdämpferbeins 20 wird sichergestellt, dass die in vertikaler Richtung auf das Kugelgelenk zwischen dem Schwenkträger 13 und dem unteren Querträger 11 wirkenden Kräfte reduziert werden und so eine höhere Lebensdauer dieses Kugelgelenks erzielbar ist. Weiterhin wird ein günstigeres Übersetzungsverhältnis zwischen Rad und Federdämpferbein 20 realisiert, so dass der Betriebsdruck in der Luftfeder im Vergleich zu der Befestigung des Federdämpferbeins 20 am unteren Querlenker 11 gesenkt werden kann. Ein weiterer Vorteil, der durch die Befestigung des Federdämpferbeins 20 direkt am Schwenkträger 13 erzielt wird, besteht in der kompakten, besonders Platz sparenden Anordnung des Federdämpferbeins 20 relativ zu der im Bereich der Vorderachse vorgesehenen Bremseinheit.

### Bezugszeichenliste

- 10.: Vorderachse
- 11.: unterer Querlenker
- 12.: oberer Querlenker
- 13.: Schwenkträger
- 14.: Schraublenkgetriebe (Lenkgetriebe)
- 15.: Lenkhebel
- 16.: Lenkzwischenhebel
- 17.: Spurstangenmittenteil
- 18.: Spurstangenteil, links
- 19.: Spurstangenteil, rechts
- 20.: Federdämpferbein
- 21.: Dämpferteil des Federdämpferbeins
- 22.: Federteil des Federdämpferbeins
- 23.: Federspeicherbremszylinder
- 24.: Spurhebel
- 25.: Lagerstelle des Lenkzwischenhebels
- 26.: untere Lagerstelle des Schwenkträgers
- 27.: obere Lagerstelle des Schwenkträgers
- 28.: Radträger
- 29.: Lagerstelle des unteren Querlenkers
- 30.: Lenkeinrichtung
- 31.: Bremsscheibe
- 32.: Bremszange
- 33.: Mitte der Lenkspindel des Schraublenkgetriebes
- 34.: Lenkwelle
- 40: Fahrschemel
- 41: Fahrzeugrahmen
- 42: Luftfeder
- 43: Druckfeder
- 44: Stützhülse für Rollbalg
- 45: Teller für die Druckfeder und die Stützhülse
- 46: Abschlussring des Federteils, luftdicht
- 47: Innenhülse zur Abstützung der Kalotte
- 48: Lagerdeckel
- 49: Elastomer
- 50: Kalotte
- 51: Kolbenstange des Dämpferteils 21
- 52: Querstabilisatoranordnung
- 53: Querstabilisatorstab in mittig gerader Ausführung
- 54: Querstabilisatorlager am Querlenker
- 55: Koppelstange zwischen Querstabilisatorstab 71 und Fahrschemel 40
- 56: Querstabilisatorstab in mittig gekröpfter Ausführung
- 57: Ölwanne
- 58: tief liegender Teil der Ölwanne (Sumpfteil)
- 59: hoch liegender Teil der Ölwanne (Ablaufteil)
- 60: Lenkung, Stand der Technik
- 61: Schraublenkgetriebe (Lenkgetriebe)
- 62: Lenkhebel
- 63: Lenkspindel des Schraubenlenkgetriebes
- 64: Spurhebel
- 65: Lenkstange
- 66: Hebel
- 67: Schwenkträger links
- 68: Lagerzapfen des Radträgers
- 69: Spurstange
- 70: Schwenkträger, rechts
- a: Fahrzeugmitte
- c-c: Lenkachse
- d: Anstellmaß für die vordere Lagerstelle des oberen Querlenkers 12 am Fahrschemel 40
- e: Kröpfung am Lenkhebel 15 und am Lenkzwischenhebel 16
- f: Höhenkröpfung am Lenkhebel 15 und am Lenkzwischenhebel 16

## Patentansprüche

1. Vorderachse mit Einzelradaufhängung und mit lenkbaren Rädern eines Nutzfahrzeuges, mit einem Fahrschemel (40), an dem Teile der Radaufhängung und der Lenkung montierbar sind, einem unteren und oberen Dreieckslenker als Querlenker (11, 12), wobei der untere Querlenker (11) über ein Kugelgelenk (26) mit dem Anschlussteil eines als Radträger ausgebildeten Schwenkträgers (13) und der obere Querlenker (12) mit einem weit ausladenden Teil des Schwenkträgers (13) und ebenfalls mit einem Kugelgelenk (27) verbunden ist und beide Querlenker (11, 12) über elastische Lager mit dem Fahrschemel (40) verbunden sind und zwischen dem oberen und unteren Querlenker (11, 12) ein Federdämpfersystem (20) angeordnet ist und mit einer hydraulischen Servolenkung für die Räder, wobei die Vorderachse (10)
- auf der einen Fahrzeugseite ein am Fahrschemel (40) angeordnetes hydraulisch unterstütztes Schraublenkgetriebe (14), das seine Lenkachse (33) etwa vertikal zur Fahrbahn hat und einen Lenkhebel (15) aufweist, der etwa parallel zur Fahrbahnebene schwenkbar ist, aufweist,
- auf der anderen Fahrzeugseite am Fahrschemel (40), spiegelbildlich zur Fahrzeugmittelachse (a) und dem Lenkhebel (15) auf der einen Seite, einen Lenkzwischenhebei (16) aufweist,
- eine dreigeteilte Spurstange (17,18,19), die aus einem Spurstangenteil links (18) einem Spurstangenteil rechts (19) und einem Spurstangenmittenteil (17) besteht, aufweist,
- ein Federdämpferbein (20) pro Fahrzeugseite aufweist, das im Federteil (22) aus einer Luftfeder (60) und einer dazu in der Luftfeder (60) angeordneten und parallel zu dieser Luftfeder geschalteten Druckfeder (61) ausgestaltet ist, **dadurch gekennzeichnet, dass** die Vorderachse (10)
- einen Lenkhebel (15) und einen Lenkzwischenhebel (16) hat, die jeweils eine Kröpfung (e) zur Fahrzeugmitte hin und eine Höhenkröpfung (f) aufweisen und dass
- der obere Querlenker (12) U-förmig mit zwei Schenkeln ausgeführt ist und ein Federteil (22) des Federdämpfersystems (20) zwischen den Schenkeln des U-förmig ausgeführten Querlenkers (12) angeordnet ist.

2. Vorderachse nach Anspruch 1, **dadurch gekennzeichnet, dass** - in Geradeausstellung der Vorderräder - der Winkel (α) zwischen der Längsachse des Spurstangenmittenteils (17) und der Verbindungslinie Spindelachse (Abriebsachse) des Schraublenkgetriebes (14) und Anlenkungspunkt des Spurstangenmittelteils (17) am Lenkhebel (15), etwa 90 Winkelgrade beträgt.

3. Vorderachse nach Anspruch 1, **dadurch gekennzeichnet, dass** der Lenkzwischenhebel (16), spiegelbildlich zum Lenkhebel (15), gespiegelt zur Fahrzeugmittelachse (α), angeordnet und ausgebildet ist.

4. Vorderachse nach Anspruch 1, **dadurch gekennzeichnet, dass** - in Fahrtrichtung gesehen - das vordere Lager des oberen Querlenkers (12) gegenüber dem hinter der Radachse liegendem Lager des Querlenkers (12) um den Betrag (d) höher liegt.

5. Vorderachse nach Anspruch 1, **dadurch gekennzeichnet dass** die Befestigung des Spurstangenteils links (18) am Lenkhebel (15) und des Spurstangenteiles rechts (19) am Lenkzwischenhebel (16) jeweils höher liegt, als die Befestigungspunkte des Spurstangenmittenteils (17) am Lenkhebel (15) und am Lenkzwischenhebel (16).

6. Vorderachse nach Anspruch 1, **dadurch gekennzeichnet, dass** die Bremszange (32) und der Federspeicherbremszylinder (23) in Fahrtrichtung gesehen vor der Radachse auf dem Schwenkträger (13) angeordnet sind.

7. Vorderachse nach Anspruch 1, **dadurch gekennzeichnet, dass** die Spurstangenteile (17,18, 19) in Fahrtrichtung gesehen, hinter der Radachse angeordnet sind.

8. Vorderachse nach Anspruch 1, **dadurch gekennzeichnet, dass** die Querstabilisatoranordnung (70) vor der Radachse gelegen ist.

9. Vorderachse nach Anspruch 1, **dadurch gekennzeichnet, dass** das Federdämpferbein (20) im Federteil (22) nur eine Druckfeder (43) aufweist.

10. Vorderachse nach Anspruch 1, **dadurch gekennzeichnet, dass** das Federdämpferbein (20) im Federteil (22) nur eine Luftfeder (42) aufweist.

11. Vorderachse nach Anspruch 1, **dadurch gekennzeichnet, dass** das Federdämpferbein (20) am unteren Querlenker (11) angelenkt ist.

12. Vorderachse nach Anspruch 1, **dadurch gekennzeichnet, dass** das Federdämpferbein (20) am Schwenkträger (13) angelenkt ist.

## Claims

1. Front axle with independent wheel suspension and with steerable wheels of a commercial vehicle, with a subframe (40), on which parts of the wheel suspension and the steering system can be mounted, with a lower and upper triangular link as transverse links (11, 12), the lower transverse link (11) being connected via a ball joint (26) to the connection part of a pivoting carrier (13) which is configured as a wheel support, and the upper transverse link (12) being connected to a widely projecting part of the pivoting carrier (13) and likewise to a ball joint (27), and both transverse links (11, 12) being connected via elastic bearings to the subframe (40), and a spring/damper system (20) being arranged between the upper and lower transverse links (11, 12), and with a hydraulic power steering system for the wheels, the front axle (10)
- having, on one vehicle side, a hydraulically assisted screw steering gear (14) which is arranged on the subframe (40), has its steering axis (33) approximately vertical with respect to the roadway and has a steering arm (15) which can be pivoted approximately parallel to the roadway plane,
- having, on the other vehicle side on the subframe (40), an intermediate steering arm (16) mirror-symmetrically with respect to the vehicle centre axis (a) and the steering arm (15) on one side,
- having a track rod (17, 18, 19) which is divided in three and consists of a left-hand track rod part (18), a right-hand track rod part (19) and a track rod centre part (17),
- having a spring/damper strut (20) per vehicle side, which spring/damper strut (20) is configured in the spring part (22) from a pneumatic spring (60) and a compression spring (61) which is arranged in addition in the pneumatic spring (60) and is connected in parallel to the said pneumatic spring, **characterized in that** the front axle (10)
- has a steering arm (15) and an intermediate steering arm (16) which in each case have an offset (e) towards the vehicle centre and a vertical offset (f), and **in that**
- the upper transverse link (12) is of U-shaped configuration with two limbs, and a spring part (22) of the spring/damper system (20) is arranged between the limbs of the transverse link (12) of U-shaped configuration.

2. Front axle according to Claim 1, **characterized in that**, in the straight-ahead position of the front wheels, the angle (α) between the longitudinal axis of the track rod centre part (17) and the connecting line of spindle axis (wear axis) of the screw steering gear (14) and articulation point of the track rod centre part (17) on the steering arm (15) is approximately 90 angular degrees.

3. Front axle according to Claim 1, **characterized in that** the intermediate steering arm (16) is arranged and configured mirror-symmetrically with respect to the steering arm (15), mirrored with respect to the vehicle centre axis (α).

4. Front axle according to Claim 1, **characterized in that**, as viewed in the driving direction, the front bearing of the upper transverse link (12) lies higher by the amount (d) than that bearing of the transverse link (12) which lies behind the wheel axle.

5. Front axle according to Claim 1, **characterized in that** the fastening of the left-hand track rod part (18) to the steering arm (15) and the right-hand track rod part (19) to the intermediate steering arm (16) in each case lies higher than the fastening points of the track rod centre part (17) to the steering arm (15) and to the intermediate steering arm (16).

6. Front axle according to Claim 1, **characterized in that** the brake calliper (32) and the spring-energy brake cylinder (23) are arranged on the pivoting carrier (13) in front of the wheel axle as viewed in the driving direction.

7. Front axle according to Claim 1, **characterized in that** the track rod parts (17, 18, 19) are arranged behind the wheel axle as viewed in the driving direction.

8. Front axle according to Claim 1, **characterized in that** the anti-roll bar arrangement (70) is situated in front of the wheel axle.

9. Front axle according to Claim 1, **characterized in that** the spring/damper strut (20) has only a compression spring (43) in the spring part (22).

10. Front axle according to Claim 1, **characterized in that** the spring/damper strut (20) has only a pneumatic spring (42) in the spring part (22).

11. Front axle according to Claim 1, **characterized in that** the spring/damper strut (20) is articulated on the lower transverse link (11).

12. Front axle according to Claim 1, **characterized in that** the spring/damper strut (20) is articulated on the pivoting carrier (13).

## Revendications

1. Essieu avant pourvu d'une suspension à roues indépendantes et de roues directrices d'un véhicule industriel, comprenant un faux-châssis (40) sur lequel des parties de la suspension de roues et de la direction peuvent être montées, comprenant des bras oscillants triangulaires supérieur et inférieur faisant office de bras oscillants transversaux (11, 12), le bras oscillant transversal inférieur (11) étant relié, par le biais d'une articulation à rotule (26), à la partie de raccordement d'un support pivotant (13) réalisé sous forme de support de roue et le bras oscillant transversal supérieur (12) étant relié à une partie faisant saillie loin du support pivotant (13) et également à une articulation à rotule (27), et les deux bras oscillants transversaux (11, 12) étant reliés par le biais de paliers élastiques au faux-châssis (40), et un système de ressort-amortisseur (20) étant disposé entre les bras oscillants transversaux supérieur et inférieur (11, 12), et comprenant une servodirection hydraulique pour les roues, l'essieu avant (10)
- comprenant, sur l'un des côtés du véhicule, un mécanisme de direction à vis sans fin (14) à assistance hydraulique disposé sur le faux-châssis (40), lequel a son axe de direction (33) approximativement vertical par rapport à la chaussée et comprend un levier de direction (15) qui peut être pivoté approximativement parallèlement au plan de la chaussée,
- comprenant, de l'autre côté du véhicule sur le faux-châssis (40), un levier intermédiaire de direction (16) en symétrie spéculaire par rapport à l'axe médian du véhicule (a) et au levier de direction (15) sur l'un des côtés,
- comprenant une barre d'accouplement (17, 18, 19) divisée en trois parties, laquelle est constituée d'une partie gauche de barre d'accouplement (18), d'une partie droite de barre d'accouplement (19) et d'une partie centrale de barre d'accouplement (17),
- comprenant une jambe de ressort-amortisseur (20) pour chaque côté du véhicule, laquelle est constituée, dans la partie ressort (22), d'un ressort pneumatique (60) et d'un ressort de compression (61) disposé en plus dans le ressort pneumatique (60) et connecté en parallèle à ce ressort pneumatique, **caractérisé en ce que** l'essieu avant (10)
- a un levier de direction (15) et un levier intermédiaire de direction (16) qui présentent respectivement un coude (e) en direction du centre du véhicule et un coude en hauteur (f), et **en ce que**
- le bras oscillant transversal supérieur (12) est réalisé en forme de U présentant deux branches et une partie ressort (22) du système de ressort-amortisseur (20) est disposée entre les branches du bras oscillant transversal (12) réalisé en forme de U.

2. Essieu avant selon la revendication 1, **caractérisé en ce que**, dans la position en ligne droite des roues avant, l'angle (α) entre l'axe longitudinal de la partie centrale de barre d'accouplement (17) et la ligne de liaison définie par l'axe de broche (axe d'usure) du mécanisme de direction à vis sans fin (14) et le point d'articulation de la partie centrale de barre d'accouplement (17) sur le levier de direction (15) vaut approximativement 90 degrés.

3. Essieu avant selon la revendication 1, **caractérisé en ce que** le levier intermédiaire de direction (16) est disposé et réalisé suivant une symétrie spéculaire par rapport au levier de direction (15), suivant une symétrie miroir par rapport à l'axe médian du véhicule (α).

4. Essieu avant selon la revendication 1, **caractérisé en ce que**, considéré dans la direction de conduite, le palier avant du bras oscillant transversal supérieur (12) se situe plus haut de la valeur (d) par rapport au palier du bras oscillant transversal (12) situé derrière l'essieu de roue.

5. Essieu avant selon la revendication 1, **caractérisé en ce que** la fixation de la partie gauche de barre d'accouplement (18) au levier de direction (15) et de la partie droite de barre d'accouplement (19) au levier intermédiaire de direction (16) se situe respectivement plus haut que les points de fixation de la partie centrale de barre d'accouplement (17) au levier de direction (15) et au levier intermédiaire de direction (16).

6. Essieu avant selon la revendication 1, **caractérisé en ce que** l'étrier de frein (32) et le cylindre de frein à ressort accumulateur (23) sont, considérés dans la direction de conduite, disposés devant l'essieu de roue sur le support pivotant (13).

7. Essieu avant selon la revendication 1, **caractérisé en ce que** les parties de barre d'accouplement (17, 18, 19) sont, considérées dans la direction de conduite, disposées derrière l'essieu de roue.

8. Essieu avant selon la revendication 1, **caractérisé en ce que** l'agencement de stabilisateur transversal (70) est situé devant l'essieu de roue.

9. Essieu avant selon la revendication 1, **caractérisé en ce que** la jambe de ressort-amortisseur (20) comprend dans la partie ressort (22) uniquement un ressort de compression (43).

10. Essieu avant selon la revendication 1, **caractérisé en ce que** la jambe de ressort-amortisseur (20) comprend dans la partie ressort (22) uniquement un ressort pneumatique (42).

11. Essieu avant selon la revendication 1, **caractérisé en ce que** la jambe de ressort-amortisseur (20) est articulée sur le bras oscillant transversal inférieur (11).

12. Essieu avant selon la revendication 1, **caractérisé en ce que** la jambe de ressort-amortisseur (20) est articulée sur le support pivotant (13).
